# EUROPEAN PATENT SPECIFICATION

(11) **EP 3 126 197 B1**
(45) Date of publication and mention of the grant of the patent: **01.05.2019**
(21) Application number: 15772912.0
(22) Date of filing: 31.03.2015
(51) Int. Cl.: B60S 1/38, B60S 1/40

(54) **WINTER WIPER ASSEMBLY**
WINTERWISCHERANORDNUNG
ENSEMBLE D'ESSUIE-GLACE D'HIVER

(30) Priority: 01.04.2014 US 201414242053
(43) Date of publication of application: 08.02.2017
(73) Proprietor: Trico Products Corporation, Rochester Hills, MI 48309 (US)
(72) Inventor: AVASILOAIE, Valentin, Dearborn Heights, MI 48125 (US); EHDE, Daniel, Ortonville, MI 48462 (US); POLOCOSER, Mitica, Wayne, MI 48184 (US)
(74) Representative: Glawe, Delfs, Moll
(86) International application number: PCT/US2015/023571
(87) International publication number: WO 2015/153596

(56) References cited:
- EP-A2- 1 232 922
- DE-A1-102007 033 594
- US-A1- 2007 017 056
- US-A1- 2007 174 989
- US-A1- 2009 151 111
- US-A1- 2010 064 468
- US-A1- 2012 030 894
- US-A1- 2012 090 123
- US-A1- 2013 067 676

## Description

### BACKGROUND OF THE INVENTION

### 1. Field of the Invention

The present invention relates generally to wiper assemblies for wiper systems, and more specifically, to winter wiper assemblies.

### 2. Description of the Related Art

Conventional automotive wiper systems known in the art include some type of wiper assembly (sometimes referred to as a wiper blade) mounted to a wiper arm which, in turn, is mounted adjacent to a surface to be wiped, such as a windshield of a vehicle, and pivotally driven to impart reciprocal motion to the wiper assembly across the windshield. The wiper assembly typically includes a rubber wiping element that contacts the windshield across the surface to be wiped. The wiper assembly often incorporates one or more metal strips that act to reinforce the wiping element and facilitate wiping contact by the wiping element across what is typically a curved glass surface. The wiper assembly also typically includes a coupler that attaches to and supports the one or more metal strips, and an adapter attached to the coupler. The adapter allows the wiper assembly to be releasably attached to the wiper arm. In this context, the wiper arm delivers a downward force to the wiper assembly that is distributed thereacross, pressing the wiper assembly into contact with the windshield. The wiper assembly also typically includes an airfoil that attaches to the metal strips, and a pair of end caps located at distal ends of the wiper assembly. The airfoil is often formed from plastic or rubber and is used to prevent the wiper assembly from lifting off the windshield. The end caps are typically used to prevent the airfoil from sliding off the metal strips in operation.

Each of the components of a wiper assembly of the type described above must cooperate to effectively clean a surface to be wiped. In addition, each of the components must be designed not only to facilitate an improved wipe quality, but also so as to perform well in different weather and driving conditions. In winter driving conditions, for example, snow and ice tend to accumulate on the wiper assembly, leading to an undesirable decrease in wiping performance and sometimes causing the wiper assembly to freeze to the windshield. In particular, snow and ice typically first adhere to the metal strips and exacerbate accumulation along the length of the wiper assembly.

While wiper assemblies known in the related art have generally performed well for their intended purpose, there remains a need in the art for a wiper system that has superior operational characteristics, reduces the cost of manufacturing the assembly, and provides an increased resistance to accumulation of snow and ice in winter driving conditions.

From document EP 1 232 922 A2 a wiper assembly according to the preamble of claim 1 is known.

### SUMMARY OF THE INVENTION

The present invention overcomes the disadvantages in the related art in a wiper assembly that includes at least one elongated support element, a wiping element, and an airfoil. The wiping element is adapted to contact a surface to be wiped. The wiping element has a head portion operatively attached to the support element, a wiping portion spaced from the head portion, and a pair of opposed grooves disposed between the head portion and the wiping portion. The airfoil has a body with a lower surface and a slot spaced from the lower surface for accommodating the support element therein. The body of the airfoil also has a channel extending from the lower surface to the slot, where the channel defines a pair of opposed shelves. The body of the airfoil also includes a pair of concealing members depending from the shelves. The concealing members are at least partially disposed in the grooves of the wiping element so as to substantially conceal the support element within the body of the airfoil.

In addition, the present invention is directed toward a wiper assembly that includes a wiping element, at least one elongated support element, a pair of end caps, and at least one airfoil. The wiping element is adapted to contact a surface to be wiped. The wiping element has a head portion, a wiping portion spaced from the head portion, and a pair of opposed grooves disposed between the head portion and the wiping portion. The support element is operatively attached to the head portion of the wiping element and has opposed longitudinal ends. The end caps are operatively attached to the longitudinal ends of the support element. The airfoil is operatively attached to the support element. The airfoil has a body with a lower surface and a slot spaced from the lower surface for accommodating the support element therein. The body of the airfoil also has a channel extending from the lower surface to the slot, where the channel defines a pair of opposed shelves. The body of the airfoil also includes a pair of concealing members depending from the shelves. The concealing members are at least partially disposed in the grooves of the wiping element so as to substantially conceal the support element within the body of the airfoil.

In this way, the wiper assembly of the present invention effectively cleans a surface to be wiped and, at the same time, provides an increased resistance to accumulation of snow and ice in winter driving conditions. Further, the wiper assembly of the present invention provides advantages related to manufacturing and component assembly.

### BRIEF DESCRIPTION OF THE DRAWINGS

Other objects, features, and advantages of the present invention will be readily appreciated as the same becomes better understood after reading the subsequent description taken in connection with the accompanying drawings wherein:
Figure 1 is a partial perspective view of a front of a vehicle having a pair of wiper assemblies pivotally mounted for reciprocal movement across a windshield of the vehicle.
Figure 2 is an enlarged perspective view of a wiper assembly according to one embodiment of the present invention.
Figure 3 is an exploded perspective view of the wiper assembly, according to one embodiment of the present invention, of Figure 2.
Figure 4 is an enlarged sectional view of the wiper assembly taken along line 4-4 of Figure 2, according to one embodiment of the present invention, showing a support element, a wiping element, an airfoil, and an end cap.
Figure 5 is an alternate sectional view of the wiper assembly of Figure 4, according to one embodiment of the present invention, showing a support element, a wiping element, and an airfoil.
Figure 6 is an alternate sectional view of the airfoil of Figures 4 and 5.

### DETAILED DESCRIPTION OF THE EMBODIMENTS OF THE INVENTION

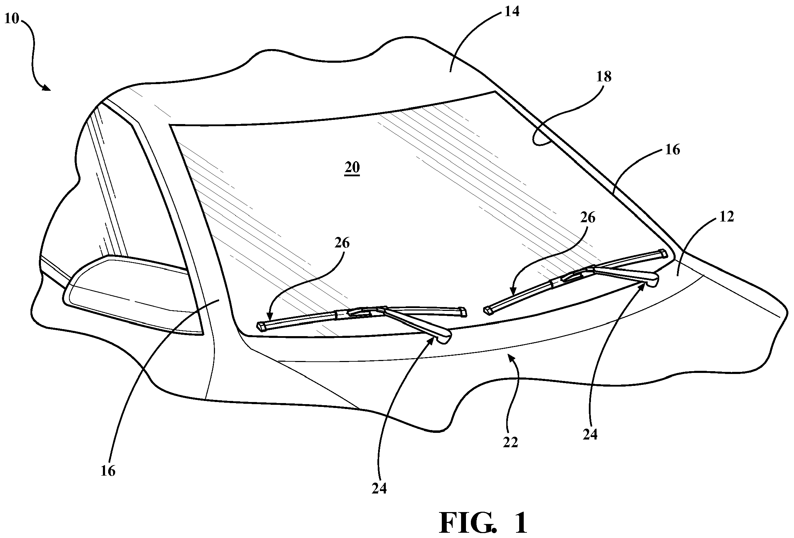

With reference to the Figures, where like numerals are used to designate like structure throughout the several views, a portion of a vehicle is schematically illustrated at 10 in Figure 1. The vehicle 10 includes a cowl 12, a roof 14, and a pair of laterally spaced front A-pillars 16 extending between the roof 14 and the cowl 12. The A-pillars 16, roof 14, and cowl 12 cooperate to define a generally rectangular opening 18 in which a curved or "swept back" glass windshield 20 is supported. As illustrated, the vehicle 10 is an automobile, but could be any type of vehicle, such as a heavy-duty truck, train, airplane, ship, construction vehicle or equipment, military vehicle, or any other type of vehicle that contains surface wiper systems.

A wiper system is generally indicated at 22 in Figure 1 and is employed to clean the windshield 20. The wiper system 22 includes a pair of wiper arms, generally indicated at 24, and a pair of wiper assemblies, generally indicated at 26, which correspond to the driver and passenger sides of the vehicle 10. However, those having ordinary skill in the art will appreciate that the wiper system 22 could employ a single wiper arm 24 and single wiper assembly 26, or more than two wiper arms 24 and more than two wiper assemblies 26, without departing from the scope of the present invention. In the representative example illustrated herein, each wiper assembly 26 is carried by a corresponding wiper arm 24. The wiper system 22 also includes an electric motor (not shown, but generally known in the art) to move the wiper assemblies 26 in an oscillating manner across the surface of the windshield 20.

While the wiper assembly 26 illustrated in Figure 1 is shown in connection with the front windshield 20 of the vehicle 10, those having ordinary skill in the art will appreciate that wiper assemblies 26 could be used in other areas of the vehicle 10 that employ a wiper system 22, such as a rear window (not shown) or a head lamp (not shown). Thus, it will be understood that the present invention is not limited for use solely in connection with wiper arms 24 adapted for use on a vehicle's windshield 20, but for use in all applications where wiper systems 22 are employed.

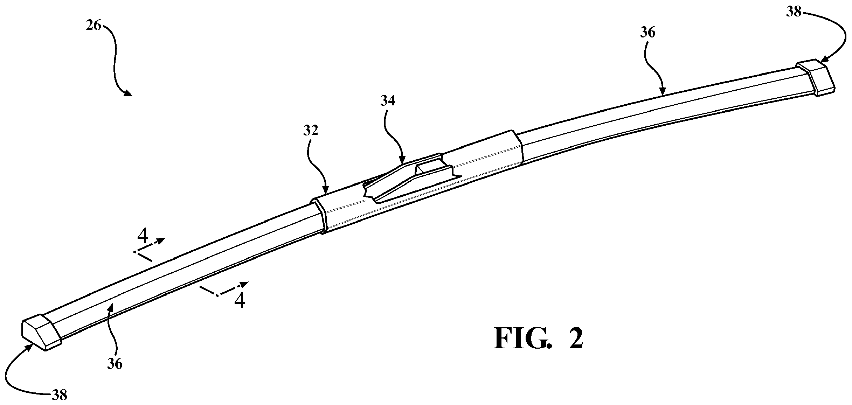

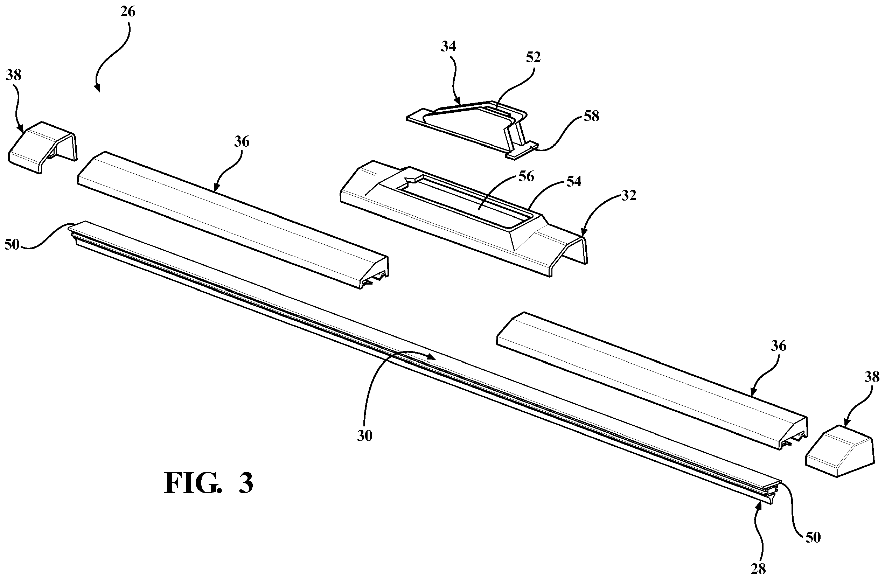

Referring to Figures 2 and 3, the wiper assembly 26 includes a wiping element 28 that is adapted to contact a surface of the vehicle 10 to be wiped, in this representative example, the windshield 20. The wiper assembly 26 also includes at least one support member 30 that defines a longitudinal axis and that acts to reinforce or support the wiping element 28. In the representative embodiment illustrated herein, the support member 30 is a monolithic beam mounted directly to the wiping element 28, as described in greater detail below. However, those having ordinary skill in the art will appreciate from the description that follows that the support member 30 could be either monolithic or defined by a pair of splines (not shown, but generally known in the art) without departing from the scope of the present invention. The wiper assembly 26 also includes a coupler 32 operatively attached to the support member 30. The coupler 32 is configured to attach to an adapter 34 which, in turn, is adapted to connect to the wiper arm 24. The wiper assembly 26 also includes an airfoil assembly, generally indicated at 36, to prevent the wiper assembly 26 from lifting away from the surface of the windshield 20. The wiper assembly 26 may still further include one or more end caps, generally indicated at 38, to prevent the airfoil assembly 26 from disengaging the support member 30. Each of the above components will be described in greater detail below.

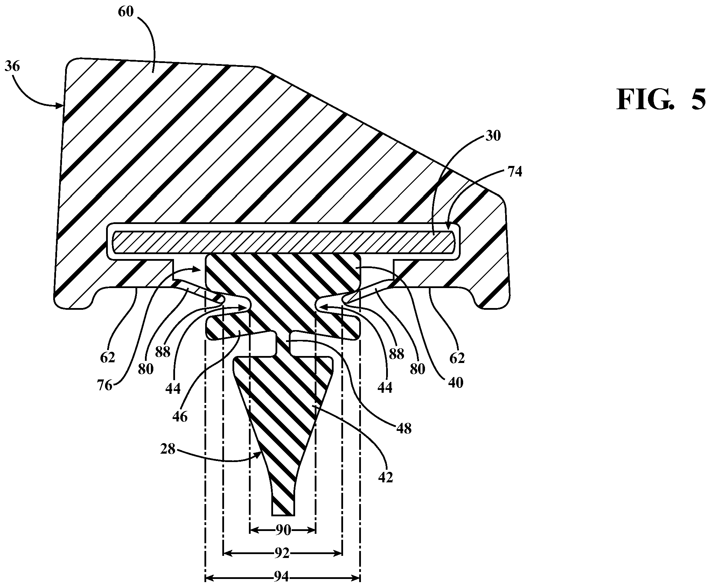

The wiping element 28 is configured to a predetermined length corresponding to a particular application, and is often manufactured through an extrusion process which enables the length of the wiping element 28 to be easily adjusted without a substantial increase in manufacturing expense. Furthermore, while the wiping element 28 of the present invention is constructed from a flexible rubber, those having ordinary skill in the art will appreciate that the wiping element 28 could be constructed from any flexible material, such as silicone or another polymer, without departing from the scope of the present invention. Referring now to Figure 5, the wiping element 28 has a head portion, generally indicated at 40, a wiping portion 42 spaced from the head portion 40, and a pair of opposed grooves 44. Each of these components will be discussed in greater detail below.

The head portion 40 of the wiping element 28 is typically operatively attached to the monolithic support member 30 with an adhesive, such as glue (not shown, but generally known in the art). However, it will be appreciated that wiping element 28 could be operatively attached to the support member 30 in any suitable way without departing from the scope of the present invention.

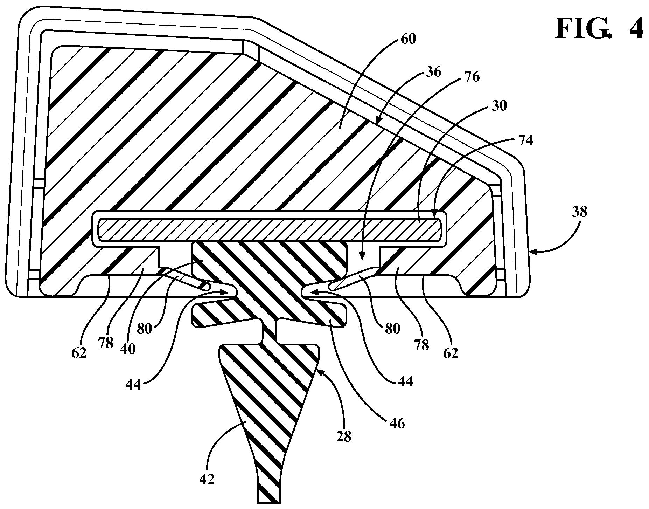

The wiping portion 42 of the wiping element 28 is adapted to contact the surface to be wiped 20. As shown in Figures 4 and 5, the wiping portion 42 has a generally triangular, tapered profile. However, those having ordinary skill in the art will appreciate that the wiping portion 42 could have any suitable profile, shape, or configuration without departing from the scope of the present invention.

The grooves 44 of the wiping element 28 are disposed between the head portion 40 and the wiping portion 42. The grooves 44 face away from each other and are formed on opposite sides of the wiping element 28. As shown best in Figure 5, the grooves 44 have a wedge-shaped profile. However, those having ordinary skill in the art will appreciate that the grooves 44 could have any suitable profile and could be disposed in any suitable location along the wiping element 28 between the head portion 40 and the wiping portion 42, so as to cooperate with the airfoil 36, as described in greater detail below. As such, it will be appreciated from the description that follows that the grooves 44 could be defined in or by other areas of the wiping element 28 without departing from the scope of the present invention.

In one embodiment, as shown in Figure 5, the wiping element 28 further includes a mid portion 46 disposed between the head portion 40 and the wiping portion 42, with the grooves 44 being disposed between the head portion 40 and the mid portion 46. Those having ordinary skill in the art will appreciate that the mid portion 46 could have any suitable profile or configuration, or be omitted from the wiping element 28 without departing from the scope of the present invention. Further, in one embodiment, the wiping element 28 includes a bridge 48 disposed between the mid portion 48 and the wiping portion 42. The bridge 48 allows the wiping portion 42 to fold over in operation across the windshield 20. However, those having ordinary skill in the art will appreciate that the bridge 48 could be disposed in any suitable part of the wiping element 28. Specifically, as discussed above, it is conceivable that the wiping element 28 could be designed without a mid portion 46, wherein the bridge 48 would thus extend between the head portion 40 and the wiping portion 42. As such, those having ordinary skill in the art will appreciate that the grooves 44 could define the bridge 48 if the wiping element 28 were designed without a mid portion 46. Moreover, it will be appreciated that the bridge 48 could have any size, shape, or configuration suitable to allow the wiping portion 42 to fold over in operation without departing from the scope of the present invention.

As previously noted, the wiper assembly 26 also includes at least one support member 30 extending between opposed longitudinal ends 50 (see Figure 3). The support member 30 is constructed from a resiliently flexible material, such as spring steel or a polymer, and is adapted to apply force from an intermediate position between the longitudinal ends 50. More specifically, the support member 30 receives force from the spring loaded wiper arm 24 at an intermediate position and distributes this force across the span of the support member 30 toward the longitudinal ends 50. To that end, the support member 30 may be curved longitudinally with a predetermined radius of curvature. In the related art, this predetermined radius of curvature is sometimes referred to as a "free form" radius of curvature. Accordingly, the curvature of the support member 30 may be symmetrical or asymmetrical, depending on the force requirements of the application and the contour of the windshield 20. The flexible, free form, pre-curved support member 30 straightens out when the wiper arm 24 applies a force thereto and directs the wiping element 28 to contact the windshield 20. Thus, the elongated support member 30 includes a free-form curvature that ensures force distribution on windshields having various curvatures and that effects proper wrapping about the windshield 20.

The support member 30 may have a substantially constant width and a constant thickness throughout its length between the longitudinal ends 50. The constant width and thickness are adapted to provide high lateral and torsional stiffness so as to avoid lateral and torsional deflections, which cause the wiping element 28 to stick/slip ("chatter") on the windshield 20 during operation. Thus, the cross-section of the support member 30 has a generally rectangular outer profile that makes the support member 30 easier to manufacture. More specifically, where the support member 30 is constructed from metal, such as spring steel, the tools and machinery used to manufacture the support member 30 are less complicated than those required to manufacture a support member 30 having varying width and/or thickness. Furthermore, where the support member 30 is constructed from a polymer, such as a thermoplastic elastomer, the manufacturing tools and extrusion process machinery are also less complicated than those employed to manufacture varying width and/or thicknesses. However, those having ordinary skill in the art will appreciate that the support member 30 could have a varying thickness and/or width without departing from the scope of the present invention. Further, as mentioned above, those having ordinary skill in the art will appreciate that the support member 30 could be monolithic or could be formed as a plurality of splines (sometimes referred to in the art as a "twin rail" blade). The support member 30 may also include one or more notches (not shown, but generally known in the art) that cooperate with the end caps 38 to operatively attach the end caps 38 to the longitudinal ends 50 of the support member 30. Notches are generally rectangular, but those having ordinary skill in the art will appreciate that the notches could have any suitable shape, or could be omitted entirely, without departing from the scope of the present invention. Additionally, the support member 30 may include one or more securing features (not shown, but generally known in the art), such as additional notches, for cooperating with the coupler 32 so as to operatively attach the support member 30 to the coupler 32. Those having ordinary skill in the art will appreciate that securing features could be of any suitable shape or configuration, or could be omitted entirely, without departing from the scope of the present invention. Specifically, those having ordinary skill in the art will appreciate that the coupler 32 could be fixed to the support member 30 in several different ways. By way of non-limiting example, the coupler 32 could be glued, welded, crimped, bolted, riveted, formed-over, locked, or otherwise fixed to the support member 30, without departing from the scope of the present invention

The wiper assembly 26 also typically includes a coupler 32 operatively attached to the support member 30. As illustrated in Figure 3, the coupler 32 has a base portion 54 and an aperture 56 disposed therein. The aperture 56 is configured to releasably engage the adapter 44, as is discussed more thoroughly below. In the embodiment illustrated herein, the coupler 32 is a unitary, one piece component. However, those having ordinary skill in the art will appreciate that the coupler 32 could be designed as a plurality of components that interlock or otherwise cooperate to operatively attach to the support member 30, without departing from the scope of the present invention. The coupler 32 is typically constructed from plastic and is formed using an injection molding process. However, those having ordinary skill in the art will appreciate that the coupler 32 could be constructed from any suitable material formed using any suitable process without departing from the scope of the present invention.

The wiper assembly 26 also typically includes an adapter 34 operatively attached to the coupler 32. The adapter 34 is employed to releasably attach the wiper assembly 26 to one or more types of wiper arms 24. Specifically, the adapter 34 illustrated in Figures 2 and 3 includes locking features 58 that cooperate with the aperture 56 of the coupler 32 to releasably attach the adapter 34 to the coupler 32. However, those having ordinary skill in the art will appreciate that the adapter 34 could be operatively attached to the coupler 32 in any suitable way without departing from the scope of the present invention. Further, those having ordinary skill in the art will appreciate that different OEM's employ wiper arms 24 configured to releasably attach to different adapters 34 which are, in turn, operatively attached to a specific wiper assembly 26. By way of example, certain wiper arms 24 employed by OEM's include "bayonet-style"; "pin-type"; "hook-type"; "push-button"; "pinch-tab"; or "side-pin" connection systems of various sizes. As such, it will be appreciated that wiper arms 24 can be connected to wiper assemblies 26 in a number of different ways, using different sizes and styles of connection systems. In the embodiment illustrated in Figures 2 and 3, the adapter 34 is mounted directly to the coupler 32 and includes an internally-mounted pivoting connector 52 which is configured to attach to a wiper arm 24 (see Figure 3). However, those having ordinary skill in the art will appreciate that the adapter 34 could be configured to connect directly to a wiper arm 24 without a connector 52. Specifically, it is conceivable that the adapter 34 could be pivotally mounted to the coupler 32 and attach directly to a wiper arm 24.

As illustrated in Figures 2 and 3, in one embodiment, the wiper assembly 26 of the present invention also includes a pair of end caps 38. The end caps 38 are adapted to be disposed adjacent to the distal ends of the support member 30. The end caps 38 are secured to the support member 30 and may have a profile that substantially mimics the contours of the airfoil assembly 36 so as to maintain the wind lift characteristics of the wiper assembly 26 and to provide an increased aesthetic value. The end caps 38 also provide a mass increase adjacent to the longitudinal ends 50 of the support member 30 that helps prevent localized chatter along the extremities of the wiping element 28 caused by a combination of wind lift and a decrease in the force distributed from the wiper arm 24 via the support member, as described above. It should be appreciated that the end caps 38 may include a locking arm (not shown, but generally known in the art) or other features that engage notches (not shown, but generally known in the art) in the support member 30 so as to secure the end caps 38 to the support member 30, as discussed above.

The wiper assembly 26 of the present invention also includes at least one airfoil 36 operatively mounted to the support member 30. The airfoil 36 extends along the length of the wiper assembly 26 and acts to reduce the likelihood of wind lift by allowing air to flow over the wiper assembly 26. More specifically, and in the embodiment illustrated herein, the airfoil 36 is formed as two individual components operatively mounted to the support member 30, with the coupler 32 extending therebtween. However, those having ordinary skill in the art will appreciate that the airfoil 36 could be formed as any suitable number of individual components without departing from the scope of the present invention.

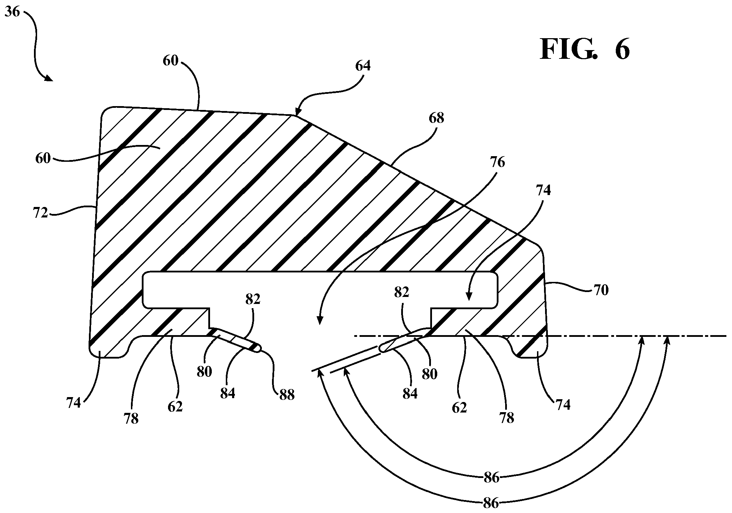

The airfoil 36 is configured to a predetermined length corresponding to a particular application, and is often manufactured through an extrusion process which enables the length of the airfoil 36 to be easily adjusted without a substantial increase in manufacturing expense. However, those having ordinary skill in the art will appreciate that the airfoil 36 of the present invention could be constructed in other ways, such as by injection molding, without departing from the scope of the present invention. Furthermore, while the airfoil 36 of the present invention does not vary in size or shape along its length, it is conceivable that the airfoil 36 could be formed so as to taper or otherwise change in size or shape without departing from the scope of the present invention. Further still, while the airfoil 36 of the present invention is constructed from plastic, those having ordinary skill in the art will appreciate that the airfoil 36 could be constructed from any suitable material without departing from the scope of the present invention. Moreover, while the airfoil 36 of the present invention is extruded from a single material (see Figure 6), those having ordinary skill in the art will appreciate that the airfoil 36 could be formed from a plurality of materials, such as by co-extrusion, over-molding, skin coating, etc., without departing from the scope of the present invention.

As shown best in Figure 6, the airfoil 36 has a body 60 with a lower surface 62 and an outer profile, generally indicated at 64. In the embodiment illustrated herein, the outer profile 64 includes an upper surface 66 spaced from the lower surface 62, an attack surface 68 depending from the upper surface 66, a forward surface 70 connecting the attack surface 68 to the lower surface 62, a rear surface 72 connecting the lower surface 62 to the upper surface 66, and a pair of lower protrusions 74 extending below the lower surface 62 and merging the lower surface 62 with each of the forward surface 70 and rear surface 72. Those having ordinary skill in the art will appreciate that the outer profile 64 described above defines an asymmetric spoiler-like body 60, wherein the attack surface 68 allows air to flow over the airfoil 36, which helps keep the wiper assembly 26 pressed against the windshield 20 in operation. However, those having ordinary skill in the art will appreciate that the body 60 of the airfoil 36 could have an outer profile 62 with any suitable shape without departing from the scope of the present invention.

As shown best in Figure 6, the body 60 of the airfoil 36 also includes a slot 74 spaced from the lower surface 62. The slot 74 is adapted to accommodate the support element 30, as described in greater detail below. The body 60 of the airfoil 36 also includes a channel 76 extending from the lower surface 62 to the slot 74. The channel 76 defines a pair of opposed shelves 78 in the body 60 of the airfoil 36. The shelves 78 are spaced from each other so as to receive at least a part of the head portion 40 of the wiping element 28 therebetween. In this way, the slot 74 cooperates with the channel 76 so as to receive the support element 30 and attached wiping element 28 within the body 60 of the airfoil 36.

Referring now to Figures 5 and 6, the body 60 of the airfoil 36 also includes a pair of concealing members 80 spaced from the slot 74 (see Figures 4-6). As shown best in Figure 5, the concealing members 80 of the airfoil 36 are at least partially disposed in the grooves 44 of the wiping element 28 such that the support element 30 is substantially concealed within the body 60 of the airfoil 36 along the length of the airfoil 36. In one embodiment, the concealing members 80 depend from the shelves 78 partially into the channel 76 and extend below the lower surface 62 of the body 60 of the airfoil 36 (see Figure 6). However, those having ordinary skill in the art will appreciate that the concealing members 80 could be disposed in any suitable location spaced from the slot 74, and could extend in any suitable way, without departing from the scope of the present invention.

As shown best in Figure 6, in one embodiment, the concealing members 80 have a top surface 82 and a bottom surface 84 spaced from the top surface 82. In the embodiment illustrated herein, the top surface 82 is parallel to the bottom surface 84. However, those having ordinary skill in the art will appreciate that the top surface 82 and bottom surface 84 could be configured, spaced, or shaped differently without departing from the scope of the present invention. Further, in one embodiment of the present invention, the concealing members 80 define an obtuse angle 86 between the lower surface 62 of the body 60 of the airfoil 36 and at least one of the top surface 82 and bottom surface 84 of the concealing members 80 (see Figure 6). However, those having ordinary skill in the art will appreciate that the concealing members 80 could also be parallel with respect to the lower surface 62 of the body 60 of the airfoil 36 without departing from the scope of the present invention. In the embodiment illustrated in Figures 4-6, the obtuse angle 86 is approximately 160-degrees and is defined with respect to the top surface 82 as well as the bottom surface 84. However, as discussed above, those having ordinary skill in the art will appreciate that the top surface 82 and bottom surface 84 could be non-parallel and, thus, the obtuse angle 86 could be formed with only one of the top surface 82 and the bottom surface 84 without departing from the scope of the present invention.

As shown in Figure 5, in one embodiment, the concealing members 80 have rounded ends 88 that are at least partially disposed in the grooves 44 of the wiping element 28. The rounded ends 88 help prevent the concealing members 80 from catching on, scratching, or tearing the wiping element 28 during assembly and in operation. However, those having ordinary skill in the art will appreciate that the concealing members 80 could have ends configured differently without departing from the scope of the present invention.

Referring now to Figure 5, as discussed above, the wiping element 28 cooperates with the airfoil 36 such that when the wiper assembly 26 is assembled, the concealing members 80 are disposed in the grooves 44 of the wiping element 28, thereby substantially concealing the support element 30 within the body 60 of the airfoil 36. To this end, the grooves 44 of the wiping element 28 are spaced from each other and define a first distance 90 therebetween. Similarly, a second distance 92 is defined between the concealing members 80 of the airfoil 36. In one embodiment, the second distance 92 is greater than the first distance 90. Those having ordinary skill in the art will appreciate that the second distance 92 being greater than the first distance 90 prevents the concealing members 80 of the airfoil 36 from pinching the wiping element 28, which is undesirable. Moreover, in one embodiment, a third distance 94 is defined by the head portion 40 of the wiping element 28, whereby the third distance 94 is greater than the second distance 92. Those having ordinary skill in the art will appreciate that the third distance 94 being greater than the second distance 92 ensures that the head portion 40 of the wiping element 28 is at least partially concealed by the concealing members 80, thereby ensuring that the support element 30 is substantially concealed. Further, those having ordinary skill in the art will appreciate that the spacing arrangements discussed above allow the concealing members 80 to be designed or formed in several different ways. Specifically, the concealing members 80 could be designed with any shape, size, or configuration suitable to be spaced from one another such that the second distance 92 is greater than the first distance 90, but smaller than the third distance 94. Further, those having ordinary skill in the art will appreciate that the concealing members 80 could be designed asymmetrically and still maintain the spacing relationships discussed above without departing from the scope of the present invention.

In this way, the concealing members 80 of the present invention improve performance of the wiper assembly 26 in winter driving conditions. Specifically, those having ordinary skill in the art will appreciate that the concealing members 80 help keep water, ice, and snow away from the support element 30, thereby substantially preventing accumulation of ice and snow, which could otherwise lead to a decrease in wiping performance or could cause the wiper assembly 26 to freeze to the windshield 20.

The invention has been described in an illustrative manner. It is to be understood that the terminology which has been used is intended to be in the nature of words of description rather than of limitation. Many modifications and variations of the invention are possible in light of the above teachings. Therefore, within the scope of the appended claims, the invention may be practiced other than as specifically described.

## Claims

1. A wiper assembly (26) comprising:
at least one elongated support element (30);
a wiping element (28) adapted to contact a surface to be wiped, the wiping element (28) having a head portion (40) operatively attached to the support element (30), a wiping portion (42) spaced from the head portion (40), and a pair of opposed grooves (44) disposed between the head portion (40) and the wiping portion (42); and
an airfoil (36) having a body (60) with a lower surface (62), a slot (74) spaced from the lower surface (62) and accommodating the support element (30) therein, a channel (76) extending from the lower surface (62) to the slot (74) and defining a pair of opposed shelves (78), and a pair of concealing members (80) spaced from the slot (74) and at least partially disposed in the grooves (44) of the wiping element (28) to substantially conceal the support element (30) within the body (60) of the airfoil (36);
**characterized in that**
the concealing members (80) have a top surface (82) and a bottom surface (84) spaced from the top surface (82), where the concealing members (80) define an obtuse angle (86) between the lower surface (62) of the body (60) and at least one of the top surface (82) and the bottom surface (84) of the concealing members (80).

2. The wiper assembly (26) as set forth in claim 1, wherein the concealing members (80) depend from the shelves (78).

3. The wiper assembly (26) as set forth in claim 1, wherein the obtuse angle (86) is approximately 160 degrees.

4. The wiper assembly (26) as set forth in claim 1, wherein the top surface (82) of the concealing members (80) is substantially parallel to the bottom surface (84) of the concealing members (80).

5. The wiper assembly (26) as set forth in claim 1, wherein the concealing members (80) have rounded ends (88), with the ends (88) at least partially disposed in the grooves (44) of the wiping element (28).

6. The wiper assembly (26) as set forth in claim 1, wherein a first distance (90) is defined between the grooves (44), a second distance (92) is defined between the concealing members (80), with the second distance (92) being greater than the first distance (90).

7. The wiper assembly (26) as set forth in claim 6, wherein a third distance (94) is defined by the head portion (40) of the wiping element (28), with the third distance (94) being greater than the second distance (92).

8. The wiper assembly (26) as set forth in claim 1, wherein the wiping element (28) further includes a mid portion (46) disposed between the head portion (40) and the wiping portion (42), with the grooves (44) disposed between the head portion (40) and the mid portion (46).

9. The wiper assembly (26) as set forth in claim 8, wherein the wiping element (28) further includes a bridge (48) disposed between the mid portion (46) and the wiping portion (42) to allow the wiping portion (42) to fold over in operation.

10. The wiper assembly (26) as set forth in any one of the preceding claims, further comprising a pair of end caps (38) operatively attached to the longitudinal ends (88) of the support element (30).

11. The wiper assembly (26) as set forth in any one of the preceding claims, with the at least one airfoil (36) being operatively attached to the support element (30).

## Patentansprüche

1. Wischeranordnung (26), aufweisend:
mindestens ein lang gestrecktes Tragelement (30);
ein Wischelement (28), welches dafür angepasst ist, um eine zu wischende Fläche zu kontaktieren, wobei das Wischelement (28) einen Kopfabschnitt (40), welcher wirksam an dem Tragelement (30) angebracht ist, einen Wischabschnitt (42), welcher von dem Kopfabschnitt (40) beabstandet ist und ein Paar gegenüberliegende Nuten (44) aufweist, welche zwischen dem Kopfabschnitt (40) und dem Wischabschnitt (42) angeordnet sind; und
ein Flügelprofil (36), welches einen Körper (60) mit einer unteren Fläche (62), einen Schlitz (74), welcher von der unteren Fläche (62) beabstandet ist und das Tragelement (30) darin aufnimmt, wobei sich ein Kanal (76) von der unteren Fläche (62) zu dem Schlitz (74) erstreckt und ein Paar gegenüberliegende Borde (78) definiert, und ein Paar verdeckende Elemente (80) aufweist, welche von dem Schlitz (74) beabstandet sind und zumindest teilweise in den Nuten (44) des Wischelements (28) angeordnet sind, um im Wesentlichen das Tragelement (30) innerhalb des Körpers (60) des Flügelprofils (36) zu verdecken;
**dadurch gekennzeichnet, dass**
die verdeckenden Elemente (80) eine obere Fläche (82) und eine untere, von der oberen Fläche (82) beabstandete Fläche (84) aufweisen, wobei die verdeckenden Elemente (80) einen stumpfen Winkel (86) zwischen der unteren Fläche (62) des Körpers (60) und mindestens einer von der oberen Fläche (82) und der unteren Fläche (84) der verdeckenden Elemente (80) definieren.

2. Wischeranordnung (26) nach Anspruch 1, wobei die verdeckenden Elemente (80) von den Borden (78) ausgehen.

3. Wischeranordnung (26) nach Anspruch 1, wobei der stumpfe Winkel (86) ungefähr 160 Grad beträgt.

4. Wischeranordnung (26) nach Anspruch 1, wobei die obere Fläche (82) der verdeckenden Elemente (80) im Wesentlichen parallel zu der unteren Fläche (84) der verdeckenden Elemente (80) ist.

5. Wischeranordnung (26) nach Anspruch 1, wobei die verdeckenden Elemente (80) abgerundete Enden (88) aufweisen, wobei die Enden (88) zumindest teilweise in den Nuten (44) der Wischelemente (28) angeordnet sind.

6. Wischeranordnung (26) nach Anspruch 1, wobei ein erster Abstand (90) zwischen den Nuten (44) definiert ist, ein zweiter Abstand (92) zwischen den verdeckenden Elementen (80) definiert ist, wobei der zweite Abstand (92) größer als der erste Abstand (90) ist.

7. Wischeranordnung (26) nach Anspruch 6, wobei ein dritter Abstand (94) durch den Kopfabschnitt (40) des Wischelements (28) definiert ist, wobei der dritte Abstand (94) größer als der zweite Abstand (92) ist.

8. Wischeranordnung (26) nach Anspruch 1, wobei das Wischelement (28) ferner einen Mittelabschnitt (46) umfasst, welcher zwischen dem Kopfabschnitt (40) und dem Wischabschnitt (42) angeordnet ist, wobei die Nuten (44) zwischen dem Kopfabschnitt (40) und dem Mittelabschnitt (46) angeordnet sind.

9. Wischeranordnung (26) nach Anspruch 8, wobei das Wischelement (28) ferner eine Brücke (48) umfasst, welche zwischen dem Mittelabschnitt (46) und dem Wischabschnitt (42) angeordnet ist, um es dem Wischabschnitt (42) zu ermöglichen, im Betrieb umzuknicken.

10. Wischeranordnung (26) nach einem der vorhergehenden Ansprüche, ferner aufweisend ein Paar Endkappen (38), welche an den longitudinalen Enden (88) des Tragelements (30) wirksam angebracht sind.

11. Wischeranordnung (26) nach einem der vorhergehenden Ansprüche, wobei das mindestens eine Flügelprofil (36) an dem Tragelement (30) wirksam angebracht ist.

## Revendications

1. Ensemble essuie-glace (26) comprenant :
au moins un élément de support allongé (30) ;
un élément essuyeur (28) adapté à venir en contact avec une surface à essuyer, l'élément essuyeur (28) ayant une portion de tête (40) fonctionnellement connectée à l'élément de support (30), une portion d'essuyage (42) espacée depuis la portion de tête (40), et une paire de gorges opposées (44) disposées entre la portion de tête (40) et la portion d'essuyage (42) ; et
une pièce aérodynamique (36) ayant un corps (60) avec une surface inférieure (62), une fente (74) espacée depuis la surface inférieure (62) et recevant l'élément de support (30) à l'intérieur, un canal (76) s'étendant depuis la surface inférieure (62) jusqu'à la fente (74) et définissant une paire de tablettes opposées (78), et une paire d'éléments de dissimulation (80) espacés depuis la fente (74) et au moins partiellement disposés dans les gorges (44) de l'élément d'essuyage (28) pour dissimuler sensiblement l'élément de support (30) à l'intérieur du corps (60) de la pièce aérodynamique (36) ;
**caractérisé en ce que**
les éléments de dissimulation (80) ont une surface supérieure (82) et une surface inférieure (84) espacée depuis la surface supérieure (82), dans lequel les éléments de dissimulation (80) définissent un angle obtus (86) entre la surface inférieure (62) du corps (60) et une surface au moins parmi la surface supérieure (82) et la surface inférieure (84) des éléments de dissimulation (80).

2. Ensemble essuie-glace (26) selon la revendication 1, dans lequel les éléments de dissimulation (80) dépendent des tablettes (78).

3. Ensemble essuie-glace (26) selon la revendication 1, dans lequel l'angle obtus (86) est approximativement de 160°.

4. Ensemble essuie-glace (26) selon la revendication 1, dans lequel la surface supérieure (82) des éléments de dissimulation (80) est sensiblement parallèle à la surface inférieure (84) des éléments de dissimulation (80).

5. Ensemble essuie-glace (26) selon la revendication 1, dans lequel les éléments de dissimulation (80) ont des extrémités arrondies (88), lesdites extrémités (88) étant au moins partiellement disposées dans les gorges (44) de l'élément essuyeur (28).

6. Ensemble essuie-glace (26) selon la revendication 1, dans lequel une première distance (90) est définie entre les gorges (44), une deuxième distance (92) est définie entre les éléments de dissimulation (80), la deuxième distance (92) étant plus grande que la première distance (90).

7. Ensemble essuie-glace (26) selon la revendication 6, dans lequel une troisième distance (94) est définie par la portion de tête (40) de l'élément essuyeur (28), la troisième distance (94) étant plus grande que la deuxième distance (92).

8. Ensemble essuie-glace (26) selon la revendication 1, dans lequel l'élément essuyeur (28) inclut en outre une portion médiane (46) disposée entre la portion de tête (40) et la portion d'essuyage (42), les gorges (44) étant disposées entre la portion de tête (40) et la portion médiane (46).

9. Ensemble essuie-glace (26) selon la revendication 8, dans lequel l'élément essuyeur (28) inclut en outre un pont (48) disposé entre la portion médiane (46) et la portion d'essuyage (42), pour permettre à la portion d'essuyage (42) de se rabattre en fonctionnement.

10. Ensemble essuie-glace (26) selon l'une quelconque des revendications précédentes, comprenant en outre une paire de capuchons d'extrémité (38) fonctionnellement attachés aux extrémités longitudinales (88) de l'élément de support (30).

11. Ensemble essuie-glace (26) selon l'une quelconque des revendications précédentes, dans lequel ladite au moins une pièce aérodynamique (36) est fonctionnellement attachée à l'élément de support (30).
